# DEMANDE DE BREVET EUROPEEN

(11) **EP 2 048 083 A1**
(43) Date de publication de la demande: **15.04.2009**
(21) Numéro de dépôt: 08290935.9
(22) Date de dépôt: 03.10.2008
(51) Int. Cl.: B65B 7/16, B65B 7/28, B65B 59/00, B65G 17/26, B65G 17/36

(54) **Unité d'operculage à plateaux pour récipients de dimensions variables et son utilisation**

(30) Priorité: 10.10.2007 FR 0707110
(71) Demandeur: Mecaplastic, 85700 Pouzauges (FR)
(72) Inventeur: Tessier, Marc, 85000 La Roche sur Yon (FR)
(74) Mandataire: Laget, Jean-Loup

(57) **Abrégé**

L'unité d'operculage à plateaux comprend un convoyeur 1 à double paire de chaînes sans fin synchrones parallèles. Les plateaux 4, munis d'alvéoles 6 pour loger les récipients à sceller, sont fixés à la paire de chaînes maître 2a, 2b, et sont équipés de volets 12 d'obturation des alvéoles 6. Les volets 12 sont solidaires d'un support commun fixé à la paire de chaînes esclave 3a, 3b. Un déphasage des paires de chaînes esclave 3a, 3b et maître 2a, 2b l'une par rapport à l'autre permet de régler le degré d'obturation de l'ensemble des ouvertures des alvéoles 6 des plateaux 4 et de loger des récipients de dimensions variables.

## Description

La présente invention concerne une unité d'operculage à plateaux, pour récipients à bords scellables, et son utilisation pour le conditionnement de produits de tailles variables.

Les opérations d'operculage de récipients ou d'emballages défilant sur des plateaux consistent soit à fermer, de préférence par thermoscellage, des couvercles de matière avec la cavité des récipients après son remplissage, soit à appliquer un film, alimenté sous forme d'une bande entre le poste de scellage et le plateau transportant les récipients, sur l'ensemble des bords desdits récipients.

Ces machines d'operculage à plateaux comportent de manière classique un dispositif de convoyage des récipients qui sont logés dans des alvéoles ménagées dans les plateaux, avançant pas à pas au-dessous de postes de scellage mobiles verticalement et disposés à l'aplomb des alvéoles dans la zone d'operculage.
Les ouvertures des alvéoles des plateaux d'une même unité d'operculage sont de dimensions prédéfinies et non modifiables.

Or lorsque l'on souhaite operculer des récipients de tailles différentes, il est nécessaire soit d'utiliser une nouvelle machine soit de modifier ou remplacer la totalité des plateaux. Pour pallier ces difficultés, il a été envisagé de ménager des alvéoles dont l'ouverture correspond à la dimension maximale des récipients à sceller. Cependant, dans le cas où les récipients sont de dimensions réduites, il est nécessaire d'introduire au dessous des bords périphériques des récipients à sceller, des éléments de calage permettant de bloquer les récipients au sein des alvéoles lors de l'opération de thermoscellage. Ces éléments de calage peuvent être disposés soit, individuellement à l'intérieur de chacune des alvéoles si les alvéoles sont des logements à fond fermé, soit, si les alvéoles sont des logements à fond ouvert, de manière groupée sous la forme d'une cale longitudinale agissant latéralement, par exemple selon une même ligne de récipients au-dessous de leur zone de transport.

Or lorsque les récipients à sceller sont munis de rebords périphériques, constituant les zones de scellage, les plateaux de transport des récipients sur le convoyeur présentent avantageusement des surfaces d'appui pour le scellage de ces rebords. II est alors difficile, voire impossible, de sceller le rebord du récipient situé à l'aplomb de cette cale et dépourvu de surface d'appui.

La présente invention a donc pour but de proposer une unité d'operculage de récipients permettant un réglage automatisé de la taille des alvéoles de réception des récipients à sceller.

A cet effet, la présente invention concerne une unité d'operculage de récipients à bords scellables, comprenant un convoyeur à chaînes sans fin et une série de plateaux couplés à au moins une chaîne, dite chaîne maître, du convoyeur, lesdits plateaux comportant au moins une rangée d'alvéoles destinées à loger les récipients, ledit convoyeur avançant pas à pas au-dessous de postes de scellage mobiles verticalement et disposés à l'aplomb des alvéoles dans la zone d'operculage, qui est caractérisée en ce que le convoyeur comporte au moins une chaîne maître et au moins une chaîne esclave à déplacement synchrone, pouvant être déphasées l'une par rapport à l'autre, et en ce que chaque plateau est équipé de volets d'obturation des alvéoles, montés sur un support commun disposé transversalement à la direction de défilement des plateaux, et couplé à ladite chaîne esclave, le déphasage entre les chaînes maître et esclave étant obtenu par déplacement axial relatif desdites chaînes maître et esclave entre elles et réglant le degré d'obturation de l'ouverture des alvéoles de l'ensemble des plateaux du convoyeur dans le sens de déplacement des plateaux.

Ainsi par un seul déplacement axial relatif des chaînes maître et esclave entre elles, il est possible d'ajuster la dimension de l'ouverture de l'ensemble des alvéoles des plateaux du convoyeur.

De manière avantageuse, chaque chaîne s'enroulant autour d'un jeu de pignons, le déplacement axial relatif desdites chaînes maître et esclave entre elles est réalisé par un décalage angulaire d'un jeu de pignons d'une chaîne par rapport au jeu de pignons de l'autre chaîne.

Selon un mode de réalisation préférée, le convoyeur comprend deux paires de chaînes parallèles synchrones, une paire de chaînes maître, et une paire de chaînes esclave, entre lesquelles défilent des plateaux, lesdits plateaux étant couplés à chacune des chaînes de la paire de chaînes maître, et les supports des volets d'obturation étant couplés à chacune des chaînes de la paire de chaînes esclave.

Les plateaux sont, de préférence, couplés à chaque chaîne de la paire de chaînes maître par l'intermédiaire de pattes de fixation au niveau de leurs bords longitudinaux (pris dans le sens de défilement du convoyeur).

Chaque support commun des volets d'obturation des alvéoles d'une même rangée transversale est de préférence fixé aux maillons de chaque chaîne de la paire de chaînes esclave par l'intermédiaire de pattes de fixation.

L'unité d'operculage, selon la présente invention, comporte des moyens permettant de réaliser le déphasage entre les chaînes maître et esclave, selon plusieurs variantes.

Selon une première variante, la paire de chaînes maître et la paire de chaînes esclave sont entraînées par des arbres d'entraînement concentriques, appelés respectivement arbre maître et arbre esclave, l'arbre maître étant solidaire des pignons des chaînes maître, l'arbre esclave étant solidaire des pignons des chaînes esclave et libre à rotation par rapport à l'arbre maître, la liaison entre les deux arbres étant réalisée au moyen d'une pièce de type ergot solidaire de l'arbre maître, et coulissant dans une fente oblongue hélicoïdale ménagée dans l'arbre esclave, de manière à régler le décalage angulaire des pignons esclave par rapport aux pignons maître, provoquant le déphasage de la paire de chaînes esclave par rapport à la paire de chaînes maître.

Selon une seconde variante, la paire de chaînes maître et la paire de chaînes esclave sont entraînées par deux moteurs distincts, synchronisés, permettant de conserver un degré d'obturation constant de l'ensemble des alvéoles, le réglage du déphasage entre les deux paires de chaînes étant obtenu par avance, ou recul de la paire de chaînes esclave lors de l'arrêt de la paire de chaînes maître.

Dans les deux variantes ci-dessus, le déphasage entre les deux paires de chaînes permet, pour chacun des plateaux du convoyeur, de faire varier l'écartement des pattes de fixation d'un support de volets d'obturation par rapport aux pattes de fixation du plateau correspondant.

L'unité d'operculage, selon la présente invention, permet de réaliser l'operculage de récipients à bords scellables selon deux modes de réalisation.

Selon un premier mode de réalisation, les bords des récipients étant recouverts d'un matériau thermosoudable se prolongeant par un couvercle entrebaîllé, dont la charnière est disposée de préférence en aval du récipient dans le sens d'avancement du convoyeur, le poste de scellage est positionné de manière à permettre, lors de sa descente vers la zone d'operculage, le rabattement dudit couvercle sur les bords du récipient.

Ainsi, le couvercle, déjà formé lors de la fabrication du récipient ou préalablement associé audit récipient, est abaissé par la tête du poste de scellage lors de sa descente vers la zone d'operculage avant l'opération de thermoscellage proprement dite. Une telle disposition permet de s'affranchir d'un moyen mécanique de positionnement du couvercle au-dessus des bords du récipient à sceller.

Lorsque l'on souhaite operculer des récipients munis de rebords périphériques, les plateaux de scellage de l'unité d'operculage présentent avantageusement des surfaces d'appui pour lesdits rebords. Ces surfaces d'appui sont avantageusement équipées de joints d'appui de scellage sur au moins une partie de la périphérie de l'alvéole, correspondant à au moins une partie des rebords périphériques desdits récipients.

Par exemple, si le récipient à sceller est de forme carré ou rectangulaire comportant trois rebords périphériques, les trois zones correspondantes de la périphérie de l'alvéole du plateau constituent des surfaces d'appui en vue du scellage, ces surfaces équipées de joints d'appui permettent de répartir la pression sur l'ensemble du rebord du récipient à sceller. Le quatrième côté peut être constitué par la charnière du couvercle.

Selon un second mode de réalisation, lorsqu'aucun couvercle n'est présent, il est nécessaire de dérouler par exemple le film à partir d'une bobine entre le poste de scellage et les récipients, dans ce cas les volets d'obturation peuvent également constituer des surfaces d'appui d'au moins un rebord du récipient et sont équipés de joints d'appui de scellage. Une telle disposition permet de réaliser le thermosoudage d'un film, alimenté sous forme d'une bande entre le poste de scellage et lesdits récipients, sur l'ensemble des rebords des récipients.

La présente invention concerne également l'utilisation de l'unité d'operculage décrite ci-dessus pour la fermeture de récipients de conditionnement de produits de taille variable, de préférence pour des produits alimentaires tels que des sandwiches, par exemple de forme triangulaire.

En effet, l'unité d'operculage trouve une application intéressante pour l'operculage de récipients contenant des sandwiches de forme triangulaire pour lesquels le nombre de tranches de pain impliquent des dimensions différentes de l'emballage, tel que l'on va pouvoir le voir dans l'exemple ci-dessous.

D'autres caractéristiques et avantages de l'invention apparaîtront dans la description détaillée qui suit se référant aux dessins annexés donnés à titre illustratif, et dans lesquels :
La figure 1 est une vue de la sortie de l'unité d'operculage ;
La figure 2 est une vue en perspective de dessous du support des volets d'obturation ;
La figure 3 est une vue en perspective de dessus d'un plateau muni des volets d'obturation ;
La figure 4 est une vue en perspective de dessous du plateau de la figure 3 ;
La figure 5 est une vue en perspective d'un récipient pouvant être scellé par l'unité d'operculage de la présente invention ;
La figure 6 est une vue en perspective du moyen de décalage des chaînes maître et des chaînes esclave l'une par rapport à l'autre ;
La figure 7 est une vue en coupe d'un plateau logeant un récipient, disposé au-dessous d'un poste de scellage, selon la direction de déplacement dudit plateau;
La figure 8 est une vue partielle de côté en élévation d'une unité d'operculage selon la présente invention.

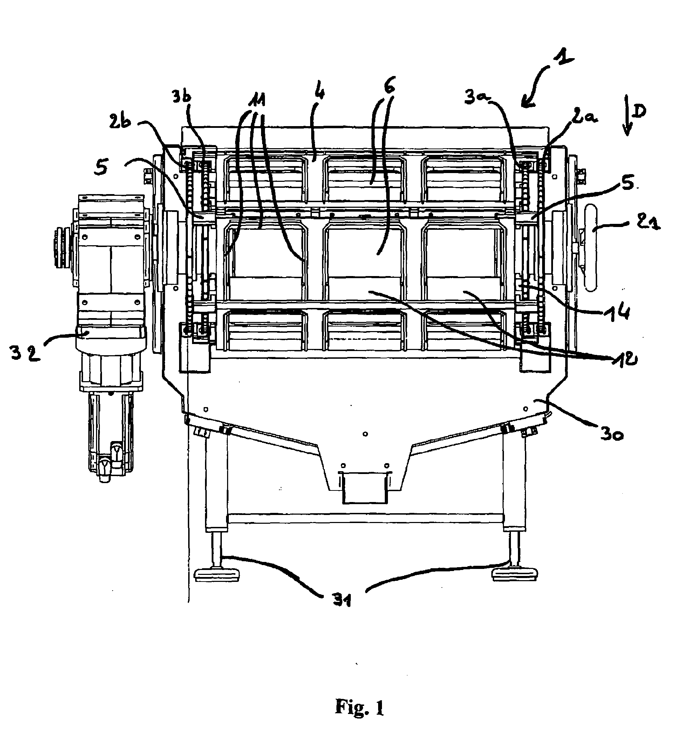

En référence à la figure 1, l'unité d'operculage, selon la présente invention, comporte un convoyeur 1 à double paire de chaînes, à savoir une paire de chaînes maître 2a, 2b et une paire de chaînes esclave 3a, 3b parallèles entre elles et se déplaçant de manière synchrone. Le convoyeur est monté sur un châssis 30 porté par des pieds 31 et est actionné par un moteur 32.

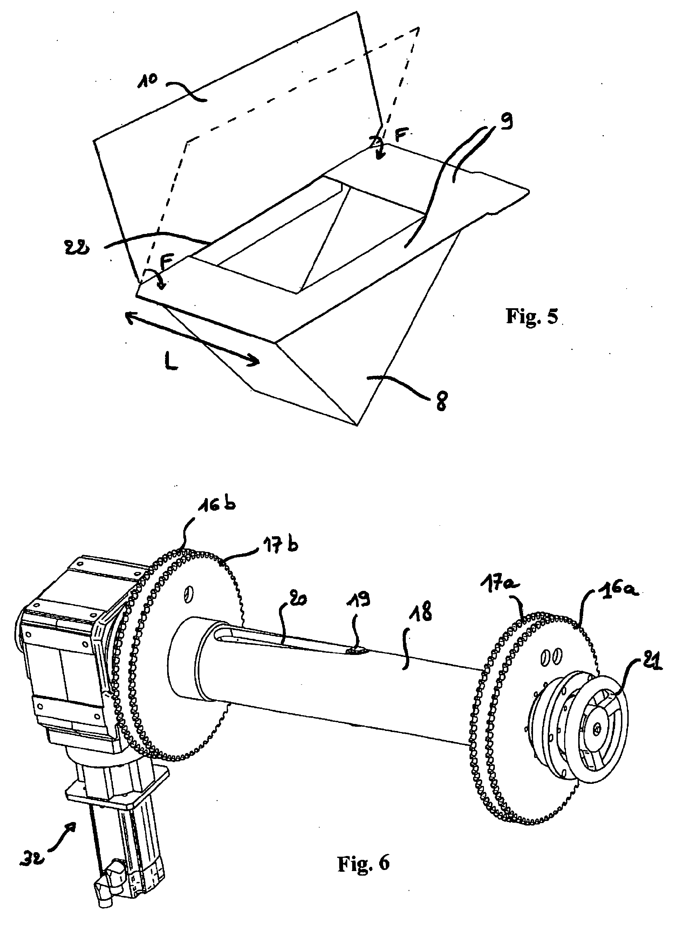

Entre les deux chaînes 2a, 2b de la paire de chaînes maître sont disposées des séries de plateaux 4 et reliées à celles-ci par des pattes de fixation 5. Ces plateaux s'étendent transversalement à la direction de défilement D des chaînes du convoyeur et comportent au moins une rangée d'alvéoles 6 servant de logements à des récipients 7 à sceller. Un récipient de ce type est représenté à la figure 5.

Dans l'exemple présenté ici, le récipient constitue un emballage de produits alimentaires de type sandwiches de forme triangulaire. La cavité 8 logeant le sandwich est également de section en forme de triangle rectangle, le sommet de l'angle droit étant situé au fond de l'emballage.

La partie supérieure du récipient, telle que présentée sur la figure 5, comporte trois rebords 9 périphériques destinés, d'une part à pouvoir saisir l'emballage une fois fermé, et d'autre part à venir supporter son couvercle 10. Ces rebords constituent en outre des zones de scellage du couvercle 10 sur l'emballage.

Pour ce type de produits alimentaires, à savoir les sandwiches, les dimensions du récipient 9 sont susceptibles de varier en fonction du nombre des tranches de pain ou de l'épaisseur du sandwich. En conséquence, la longueur L du répicient peut être variable.

Les plateaux 4 de l'unité d'operculage présentent des surfaces d'appui des rebords périphériques d'un tel récipient 7, également sur trois côtés. Ces surfaces d'appui sont équipées de joints 11 d'appui de scellage destinés à répartir sur l'ensemble des bords la pression appliquée par la tête de scellage sur ces surfaces. Ces joints 11 sont de préférence en matériau souple, par exemple en silicone.

Selon la présente invention, les plateaux 4 sont équipés de volets 12 d'obturation de chacune des alvéoles 6. Ces volets 12 sont montés sur un barreau 13 transversal leur servant de support commun, ledit barreau 13 étant fixé par l'intermédiaire d'une patte 14 à ses extrémités aux maillons des deux chaînes esclave 3a, 3b, et est monté coulissant par rapport auxdits plateaux 4.

Chaque volet 12 vient obturer une partie de l'ouverture d'une alvéole 6 dans le sens longitudinal, à savoir le sens du déplacement du plateau 4. Le degré d'obturation maximal des alvéoles 6 correspond à la longueur L minimale du récipient 7 à sceller, le degré d'obturation minimal correspondant à la longueur L maximale dudit récipient.

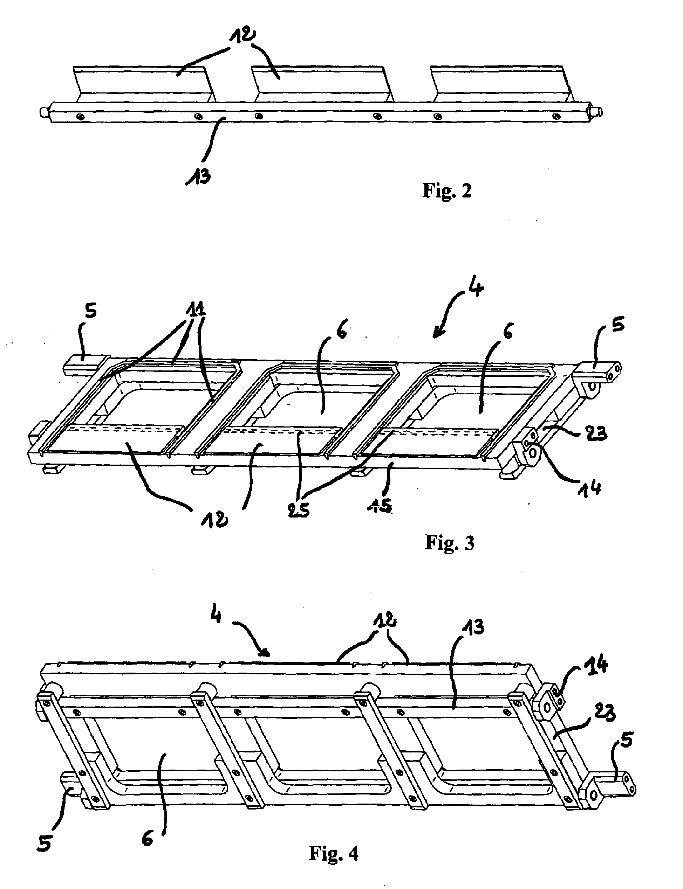

Ces volets 12 constituent également des surfaces d'appui possible pour un quatrième rebord périphérique du récipient 7 si nécessaire. Lesdits volets 12 peuvent être également équipés d'un joint 25 d'appui de scellage (par exemple tel que schématisé en pointillés sur la figure 3). Le détail de ces plateaux 4 est présenté sur les figures 3 et 4. Les volets 12 peuvent reposer partiellement sur le bord transversal 15 du plateau (pris dans le sens de défilement du plateau). Le barreau 13 coulisse dans un logement 23 ménagé au niveau des bords longitudinaux du plateau (pris dans le sens de défilement du plateau).

Ainsi, il est possible de faire varier l'écartement entre les pattes d'entraînement visibles sur les figures 3 et 4 respectivement du plateau 4 et du barreau 13 de manière à rapprocher ou à écarter ces pattes 5, 13 et donc à obturer plus ou moins les alvéoles 6 équipées des volets 12. Il est ainsi possible de loger des récipients de longueur L variable, la longueur étant prise dans le sens de défilement du plateau 4.

Le réglage de l'écartement est obtenu par un déplacement relatif axial de la (des) chaîne(s) maître et de la (des) chaîne(s) esclave entre elles.

La figure 6 présente un moyen de décaler ces deux chaînes. Les deux chaînes maître 2a, 2b sont entraînées par un jeu de pignons 16a, 16b maître disposé parallèlement à un jeu de pignons 17a, 17b esclave entraînant les deux chaînes esclave 3a, 3b.

Ces pignons sont entraînés par deux arbres d'entraînement concentriques, l'arbre maître (non visible sur la figure 6) étant solidaire des pignons 16a, 16b des chaînes maître, l'arbre esclave 18 étant solidaire des pignons des chaînes esclave et libre à rotation par rapport à l'arbre maître.

La liaison entre l'arbre maître et l'arbre esclave 18 est réalisée au moyen d'une pièce de type ergot 19 solidaire de l'arbre maître. Cet ergot 19 coulisse dans une fente 20 oblongue hélicoïdale ménagée dans l'arbre esclave 18 disposé à la périphérie de l'arbre maître.

Ainsi, il est possible par une opération manuelle sur la poignée 21 latérale de faire coulisser l'ergot 19 dans ladite fente 20 de l'arbre esclave 18 et de décaler ainsi angulairement les pignons esclave 17a, 17b par rapport aux pignons maître 16a, 16b. Un tel décalage angulaire provoque le déphasage de la paire de chaînes esclave 3a, 3b par rapport à la paire de chaînes maître 2a, 2b. Il est bien entendu que ce réglage est effectué lorsque les chaînes sont à l'arrêt. Ce réglage peut également être effectué de manière automatisée.

Selon une seconde variante de l'invention non représentée, la paire de chaînes maître et la paire de chaînes esclave peuvent être entraînées par deux moteurs distincts, synchronisés, permettant de conserver un degré d'obturation constant de l'ensemble des alvéoles 6. Le réglage du déphasage entre les deux paires de chaînes maître et esclave est alors obtenu par avance ou recul de la paire de chaînes esclave lors de l'arrêt de la paire de chaînes maître.

Dans les deux variantes, l'opération de déphasage entre les chaînes maître et esclave provoque le déplacement simultané de l'ensemble des volets 12 d'obturation et ajuste donc simultanément l'ouverture de l'ensemble des alvéoles 6 des séries de plateaux 4 disposées sur le convoyeur 1.

Le dispositif présenté ici permet donc un réglage automatisé des dimensions des alvéoles 6 de réception des récipients 7 ou emballages sur les plateaux 4 de scellage. Ce dispositif est appliqué, ici, à une unité d'operculage mais pourrait être utilisé pour d'autres applications pour lesquelles doivent être transportés des récipients munis de bords périphériques.

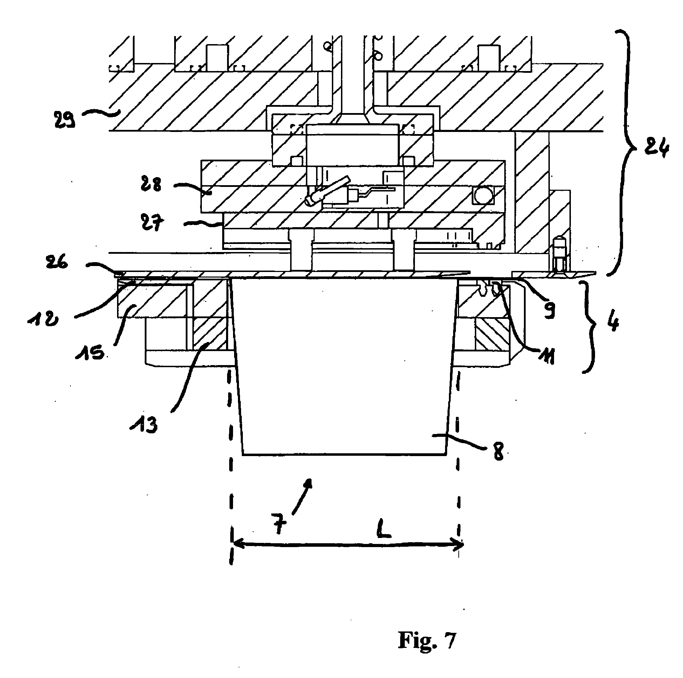

La figure 7 montre le positionnement du plateau 4 dans la zone de scellage. Le poste de scellage 24, fixé sur un longeron de soutien 29 comporte une têtede soudure 27 qui est solidaire d'un élément chauffant 28 et de même forme que les bords du récipient 7 à sceller (par exemple en forme d'un U s'il y a trois bords) et qui, mue par un piston, vient s'appliquer sur lesdits bords. Les joints de scellage 11 disposés sur le plateau 4, à la périphérie de l'alvéole 6 permettent de répartir la pression appliquée sur l'ensemble des surfaces d'appui. Pour faciliter l'opération de scellage, la partie inférieure du poste de scellage est équipée d'un ou plusieurs éléments de maintien 26 horizontaux du film ou du couvercle à thermosceller sur les bords du récipient 7. Ces éléments de maintien 26 peuvent par exemple affecter la forme d'une plaque, de taille inférieure à la tête de soudure 27, ou encore la forme de "skis" longitudinaux.

Comme indiqué précédemment, le récipient 7, arrivant dans la zone de scellage, peut être préalablement muni d'un couvercle 10 entrebaîllé qui est par exemple constitué de matière avec la cavité 8 de l'emballage, la charnière 22 dudit couvercle 10 étant avantageusement disposée transversalement au défilement sur le convoyeur, et de préférence, encore, en position aval de l'alvéole 6. Ainsi lorsque le plateau 4, avançant pas à pas, s'approche d'un poste de scellage 24, ce dernier (équipé dans sa partie inférieure d'un ou de plusieurs éléments de maintien 26 du couvercle, comme visible sur la figure 7), en descendant en direction de la zone d'operculage, vient abaisser, selon la flèche F, le couvercle 10 et le plaquer sur les rebords 9 périphériques du récipient avant de les sceller. Dans ce cas, le volet 12 d'obturation n'a pas besoin d'être équipé d'un joint d'appui de scellage, le scellage s'effectuant sur les trois autres bords périphériques.

L'unité d'operculage décrite ici peut également s'appliquer au thermosoudage d'un film alimenté sous forme d'une bande continue entre le poste de scellage et lesdits récipients 7 afin de sceller le film sur l'ensemble des rebords 9 périphériques des récipients. Dans ce cas, les volets 12 sont également équipés d'un joint 25 d'appui de scellage, l'opération de scellage intervenant sur les quatre bords périphériques des récipients 7.

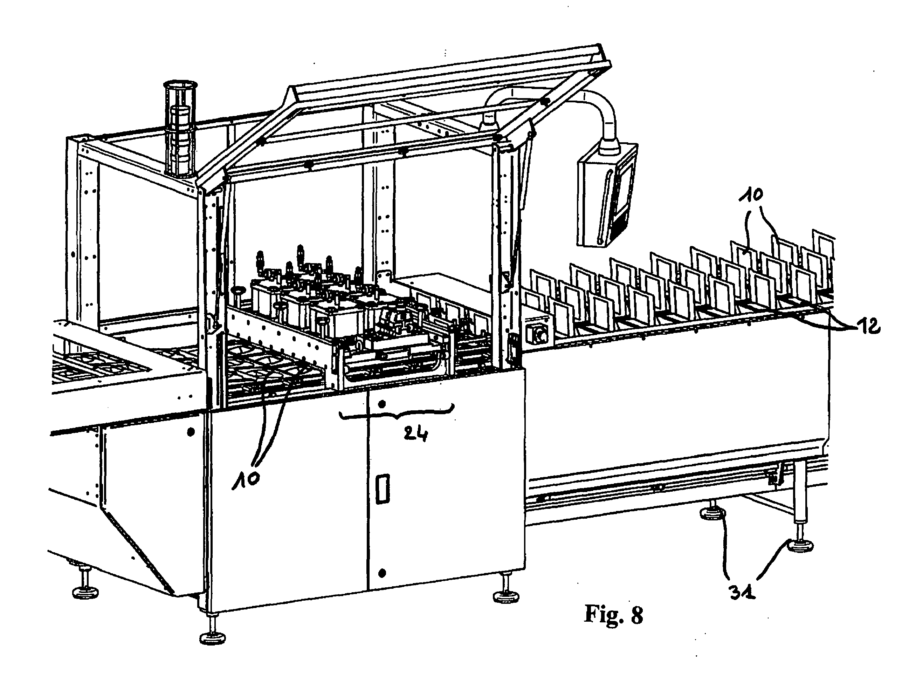

La figure 8 présente une vue d'ensemble d'une unité d'operculage selon la présente invention, permettant d'illustrer le déroulement de l'opération d'operculage. Les plateaux 4, transportant ici chacun deux rangées de trois récipients 7 munis de couvercles 10 relevés, défilent de manière séquentielle, après avoir été remplis en amont, de la droite vers la gauche, puis se présentent et s'arrêtent, sous le poste de scellage 24 qui comporte deux rangées de trois têtes de scellage. Les récipients 7 operculés sont ensuite évacués par la gauche sur cette figure.

## Revendications

1. Unité d'operculage de récipients (7) à bords scellables, comprenant un convoyeur (1) à chaînes sans fin et une série de plateaux (4) couplés à au moins une chaîne, dite chaîne maître (2a,2b), du convoyeur, lesdits plateaux (4) comportant au moins une rangée d'alvéoles (6) destinées à loger les récipients (7), ledit convoyeur (1) avançant pas à pas au-dessous de postes de scellage (24) mobiles verticalement et disposés à l'aplomb des alvéoles (6) dans la zone d'operculage,
**caractérisée en ce que** le convoyeur (1) comporte au moins une chaîne maître (2a,2b) et au moins une chaîne esclave (3a,3b) à déplacement synchrone, pouvant être déphasées l'une par rapport à l'autre, et **en ce que** chaque plateau (4) est équipé de volets (12) d'obturation des alvéoles (6), montés sur un support commun disposé transversalement à la direction de défilement des plateaux (4), et couplé à ladite chaîne esclave (3a,3b), le déphasage entre les chaînes maître (2a,2b) et esclave (3a,3b) étant obtenu par déplacement axial relatif desdites chaînes maître et esclave entre elles et réglant le degré d'obturation de l'ouverture des alvéoles (6) de l'ensemble des plateaux (4) du convoyeur dans le sens de déplacement des plateaux (4).

2. Unité selon la revendication 1,
**caractérisée en ce que** chaque chaîne s'enroulant autour d'un jeu de pignons, le déplacement axial relatif desdites chaînes maître (2a,2b) et esclave (3a,3b) entre elles est réalisé par un décalage angulaire d'un jeu de pignons d'une chaîne par rapport au jeu de pignons de l'autre chaîne.

3. Unité selon la revendication 1 ou 2,
**caractérisée en ce que** le convoyeur (1) comprend deux paires de chaînes parallèles synchrones, une paire de chaînes maître (2a,2b), et une paire de chaînes esclave (3a,3b), entre lesquelles défilent des plateaux (4), lesdits plateaux étant couplés à chacune des chaînes de la paire de chaînes maître (2a,2b), et les supports des volets (12) d'obturation étant couplés à chacune des chaînes de la paire de chaînes esclave (3a,3b).

4. Unité selon l'une quelconque des revendications précédentes,
**caractérisée en ce que** la paire de chaînes maître (2a,2b) et la paire de chaînes esclave (3a,3b) sont entraînées par des arbres d'entraînement concentriques, appelés respectivement arbre maître et arbre esclave (18), l'arbre maître étant solidaire des pignons (16a,16b) des chaînes maître (2a,2b), l'arbre esclave (18) étant solidaire des pignons (17a,17b) des chaînes esclave (3a,3b) et libre à rotation par rapport à l'arbre maître, la liaison entre les deux arbres étant réalisée au moyen d'une pièce de type ergot (19) solidaire de l'arbre maître, et coulissant dans une fente (20) oblongue hélicoïdale ménagée dans l'arbre esclave (18), de manière à régler le décalage angulaire des pignons esclave (17a,17b) par rapport aux pignons maître (16a,16b), provoquant le déphasage de la paire de chaînes esclave (3a,3b) par rapport à la paire de chaînes maître (2a,2b).

5. Unité selon la quelconque des revendications 1 à 3,
**caractérisée en ce que** la paire de chaînes maître (2a,2b) et la paire de chaînes esclave (3a,3b) sont entraînées par deux moteurs distincts, synchronisés, permettant de conserver un degré d'obturation constant de l'ensemble des alvéoles, le réglage du déphasage entre les deux paires de chaînes étant obtenu par avance, ou recul de la paire de chaînes esclave (3a,3b) lors de l'arrêt de la paire de chaînes maître (2a,2b).

6. Unité selon l'une quelconque des revendications précédentes,
**caractérisée en ce que**, les bords des récipients (7) étant recouverts d'un matériau thermosoudable se prolongeant par un couvercle (10) entrebaîllé, dont la charnière (22) est disposée de préférence en aval du récipient dans le sens d'avancement du convoyeur (1), le poste de scellage (24) est positionné de manière à permettre, lors de sa descente vers la zone d'operculage, le rabattement dudit couvercle (10), sur les bords du récipient (7).

7. Unité selon la revendication 6,
**caractérisée en ce que** les plateaux (4) présentent des surfaces d'appui pour les rebords (9) de récipients (7) munis de rebords périphériques,

8. Unité selon la revendication 7,
**caractérisée en ce que** lesdites surfaces d'appui sont équipées de joints d'appui (11) de scellage sur au moins une partie de la périphérie de l'alvéole (6), correspondant à au moins une partie des rebords (9) périphériques desdits récipients (7).

9. Unité selon la revendication 8
**caractérisée en ce que** les volets (12) d'obturation constituent également des surfaces d'appui d'au moins un rebord de récipient et sont équipés de joints d'appui (25) de scellage, permettant de réaliser le thermosoudage d'un film, alimenté sous forme d'une bande entre le poste de scellage et lesdits récipients, sur l'ensemble des rebords des récipients (7).

10. Utilisation de l'unité selon les revendications 1 à 9, pour la fermeture de récipients de conditionnement de produits de taille variable, de préférence pour des produits alimentaires tels que des sandwiches.
